# EUROPÄISCHE PATENTSCHRIFT

(11) **EP 2 236 475 B1**
(45) Veröffentlichungstag und Bekanntmachung des Hinweises auf die Patenterteilung: **28.02.2018**
(21) Anmeldenummer: 10156991.1
(22) Anmeldetag: 19.03.2010
(51) Int. Cl.: C04B 24/38, C04B 28/02, C04B 28/10, C04B 28/14

(54) **Hydroxyalkyl-Cassiaether enthaltende, hydraulisch abbindende Stoffmischungen**
Hydraulically hardening material mixtures containing hydroxyalkyl cassia ether
Mélanges de matière à liaison hydraulique contenant de hydroxyalkyl éther de cassie

(30) Priorität: 31.03.2009 DE 102009015696
(43) Veröffentlichungstag der Anmeldung: 06.10.2010
(73) Patentinhaber: Glycomer GmbH, 80797 München (DE)
(72) Erfinder: Kuhn, Manfred, D-80797 München (DE); Wildmoser, Stefan, D-85293 Reichertshausen (DE)
(74) Vertreter: Keller, Günter

(56) Entgegenhaltungen:
- EP-A1- 1 050 544
- EP-A2- 0 146 911
- WO-A1-03/078473
- US-A1- 2004 055 512

## Beschreibung

Trockene, hydraulisch abbindende Baustofffertigmischungen sind weit verbreitet und im Handel erhältlich. Zu ihrer bestimmungsgemäßen Anwendung ist es in der Regel notwendig, dass diese Baustoffmischungen mit einer bestimmten, vom Hersteller empfohlenen Wassermenge vermischt werden.

Die hydraulischen Bindemittel basieren fast ausnahmslos auf Zement, Kalk oder Gips und deren Mischungen untereinander wie Kalk/Zement oder Kalk/Gips. Diese Baustoffgemische finden als Putze, Zement- und Gipsmörtel, Kleber und Spachtelmassen mannigfaltige Verwendung.

Unter hydraulischen Bindemitteln im Sinne der vorliegenden Erfindung werden solche verstanden, die unter Wasseraufnahme erhärten. Chemisch bestehen die hydraulischen Bindemittel aus Calciumsulfaten wie Gips, Anhydrit, α- und β-Halbhydraten des Gips, aus kalkhaltigen Produkten wie CaO und Ca(OH)₂ und aus Calciumsilikaten und Calciumaluminaten, die vor allem CaO, SiO₂, Al₂O₃ und Fe₂O₃ in unterschiedlichen Mengenverhältnissen enthalten.

Üblicherweise werden diese Baustoffmischungen mit den verschiedenartigsten Additiven und Zuschlagstoffen versehen, um ihnen nach Zusatz des Anmachwassers optimale Eigenschaften zu verleihen.

Die Zusätze zur Optimierung der wasserhaltigen Baustoffmischungen können anorganischer oder organischer Natur sein.

Bekannte Zuschlagstoffe sind beispielsweise Schwerzuschlagstoffe wie Sand oder gemahlener Kalkstein, Leichtzuschlagstoffe sind zum Beispiel aufgeblätterter Vermiculit, Bentonit, Sepiolit, Attapulgit, Bimsstein, Perlit, Sägemehl, Glasschaumkügelchen, Polyurethanschaumstoffteilchen.

Als Additive oder Zusatzstoffe werden, besonders im Falle der Maschinen- oder auch Handputze, sowohl für den Außenbereich auf Basis zementärer hydraulischer Bindemittel als auch im Bereich der meist auf Gips basierenden Innenputze, Luftporenbildner in Form von anionischen Tensiden wie Natriumlaurylsulfat, sekundären Olefinsulfonaten oder linearen Alkylbenzolsulfonaten zugesetzt.

Ferner werden Celluloseether zur Steuerung des Wasserrückhaltevermögens und Stellmittel auf Basis Stärkeether verwendet. Weitere Additive wie Abbindeverzögerer, Abbindebeschleuniger, Netzmittel, Viskositätsgeber, Hydrophobierungsmittel, Thixotropiermittel sind ebenfalls gebräuchlich.

Die Aufgabe der Wasserretentionsmittel in wasserhaltigen, hydraulischen Baustoffmischungen besteht darin, das durch die Wirkung von Kapillarkräften verursachte Wegschlagen des Anmachwassers zu verhindern. Dieser Wasserentzug kann entweder durch einen saugenden, porösen Untergrund oder durch die anzubringende Oberflächenverkleidung, die durch die Baustoffmischung mit dem Untergrund verbunden werden soll, bedingt sein.

Nach dem Stand der Technik kommen zur Steuerung des Wasserrückhaltevermögens bis auf wenige Ausnahmen überwiegend Additive aus der Produktklasse der Celluloseether zum Einsatz.

Kommerziell eingesetzte Celluloseether liegen in zahlreichen modifizierten Varianten und Viskositätsstufen vor. Vorwiegend werden neben den klassischen Methylcellulosen (MC) Hydroxiethylcellulosen (HEC), Hydroxipropylcellulosen (HPC), nichtionische Mischether wie Methylhydroxiethylcellulosen (MHEC) und Methylhydroxipropylcellulosen (MHPC) eingesetzt.

Anionische Celluloseether wie Carboximethylcellulosen sind wegen der ihnen innewohnenden Kalziumreaktivität und wegen des fehlenden Wasserrückhaltevermögens in den erwähnten wässrigen, hydraulischen Bindemittelsystemen ungeeignet.

Die nichtionischen Celluloseether benötigen zum Erreichen der Kaltwasserlöslichkeit einen relativ hohen Grad an wasserlöslichmachenden Substituenten. Deshalb muss das Ausgangsmaterial zur Herstellung von Celluloseethern, nämlich Cellulose oder Baumwolllinters, mit, in Bezug auf Cellulose, hohen molaren Mengen an Veretherungsmitteln wie Methylchlorid, Ethylenoxid oder Propylenoxid zur Reaktion gebracht werden. Die genannten Chemikalien besitzen ein beträchtliches Gefährdungspotential bezüglich ihrer toxikologischen Eigenschaften, der Explosionsgefahr, der Umweltverträglichkeit und der Arbeitssicherheit.

Dies erfordert einen hohen technologischen und finanziellen Aufwand bei der Prozessführung zur Herstellung dieser Celluloseether und bei der Lagerung und Logistik der genannten Chemikalien, um die zur Risikominimierung notwendigen Sicherheitsmaßnahmen zu gewährleisten.

Es ist daher wünschenswert, Produkte zur Verfügung zu stellen, die die Aufgabe der Steuerung des Wasserrückhaltevermögens in hydraulisch abbindenden, wasserhaltigen Baustoffmischungen auf ähnliche Weise erfüllen wie Celluloseether, jedoch gleichzeitig einen deutlich niedrigeren molaren Substitutionsgrad aufweisen.

Erfindungsgemäß werden modifizierte Polysaccharide eingesetzt, die von einer anderen Quelle stammen. Als Ausgangsmaterial werden Galaktomannane eingesetzt, die von Cassia-Pflanzen stammen. Die hauptsächlich bekannten Vertreter dieser Pflanzen, Cassia obtusifolia, und Cassia tora, gedeihen bevorzugt in semiariden Klima. Die Polysaccharide, die in den Endosperm-Abschnitten von Cassia obtusifolia und Cassia tora vorkommen, sind vor allem aus Galaktose- und Mannoseeinheiten, nur in untergeordnetem Maße auch aus anderen Zuckerbausteinen aufgebaut. Das Verhältnis der hauptsächlichen Grundbausteine Galaktose:Mannose beträgt bei Cassia etwa 1:4 bis 1:8, bevorzugt etwa 1:5 bis 1:7. Cassiagalaktomannan ist in kaltem Wasser nahezu unlöslich und geht auch durch Kochen nicht vollständig in Lösung.

Die EP 0 146 911 beschreibt Alkylether von Cassiagalaktomannanen, die vor allem in der Textilindustrie als Verdickungsmittel eingesetzt werden.

Die DE 199 20 688 beschreibt radiolytisch modifizierte Heteropolysaccharide und Heteropolysaccharidderivate, die unter anderem auch aus Cassiagalaktomannanen hergestellt werden. Durch die radiolytische Bestrahlung wird das Molekulargewicht der Galaktomannane reduziert, wodurch diese andere Eigenschaften erlangen. Erfindungsgemäß werden Galaktomannane aus Cassia eingesetzt, die chemisch mit einer Hydroxialkylgruppe derivatisiert sind. In einer bevorzugten Ausführungsform werden hierzu Epoxide mit 2 bis 4 Kohlenstoffatomen (Ethylenoxid, Propylenoxid, Butylenoxid) mit dem Galaktomannangerüst umgesetzt. Dabei reagiert die Epoxigruppe mit einem Hydroxylrest eines Zuckers des Polygalaktomannangerüstes und es entsteht eine 2-Hydroxialkylsubstitution. Der Substitutionsgrad liegt in einem Bereich von wenigstens 0,1 bis zu 0,6.

In einer weiteren Ausführungsform wird das Polygalaktomannan noch mit einer Zweitsubstitution versehen. In einer Ausführungsform handelt es sich bei den Reagenzien, die zu der Zweitsubstitution führen, um einen Glycidylrest, an den beispielsweise über eine Ethergruppe ein weiterer Alkylrest gebunden ist. Wenn der Glycidylrest mit der Hydroxylgruppe eines Zuckers reagiert, entsteht in 2-Stellung der formal neu angehefteten Propyl-Gruppierung eine Hydroxylgruppe. Darüber hinaus weist dieser Propyl-Rest an Kohlenstoffatom 3 eine Alkoxi-Gruppe auf. Die Alkoxi-Gruppe weist bevorzugt einen Butylrest auf.

In mengenmäßiger Hinsicht tritt die Zweitsubstitution stark hinter die Substitution mit dem C₂-C₄(-Hydroxialkylrest) zurück. Der Grad der Substitution des Zweitsubstituenten beträgt maximal 0,2, bevorzugt bis zu 0,1 und ganz bevorzugt bis zu 0,01. Die Gesamtsubstitution, also die Substitution mit Hydroxialkylrest und Zweitsubstitution liegt bevorzugt unter 0,6.

Überraschenderweise wurde gefunden, dass Hydroxialkyl-Cassia Derivate mit einem schon so geringen Substitutionsgrad von kleiner 0,6 eine dem Stand der Technik vergleichbare Wasserretention aufweisen, was die zur Erreichung dieser niedrigen Substitutionsgrade insgesamt benötigten molaren Mengen an gefährlichen Ausgangschemikalien drastisch reduziert.

Beim Aufbringen von Mörteln, Putzmassen, Spachtelmassen und Klebern auf Gips-, Kalk/Gips-, Kalk/Zement- oder Zementbasis bedient man sich heute moderner Arbeitstechniken, die hohe Anforderungen an die zugrunde liegenden Baustoffmischungen stellen.

Zum Erzielen der geforderten hohen Qualitätsstandards spielen Wasserretentionsmittel eine gewichtige und entscheidende Rolle.

Mittel der Wahl und in ihren Eigenschaften bis heute unerreicht ist die Substanzklasse der wasserlöslichen, nichtionischen Celluloseether. Nichtionische Celluloseether werden in zahllosen Varianten und Konfektionierungen hergestellt. Allen diesen nichtionischen, als Wasserretentionsmittel eingesetzten Celluloseethern ist ein relativ hoher Substitutionsgrad gemein.

Uniform substituierte Celluloseether wie Alkylcellulosen benötigen einen Substitutionsgrad von üblicherweise von 1,3 bis 1,8 und höher, um bestimmungsgemäß einsetzbar zu sein. Typische und älteste Vertreter dieser Verbindungsklasse sind die Methylcellulosen, üblicherweise mit MC abgekürzt. Das Kürzel MC steht auch heute noch häufig synonym für die gesamte Substanzklasse der nichtionischen Celluloseether. Ebenfalls weit verbreitet, allerdings mehr im amerikanischen Wirtschaftsraum, sind die Ethylcellulosen, EC.

Als Wasserretentionsmittel in Baustoffmischungen werden jedoch in weit höherem Maße sogenannte Mischether eingesetzt. Hierbei handelt es sich im wesentlichen um Methylhydroxiethylcellulosen MHEC und Methylhydroxipropylcellulosen MHPC. Man trifft auch, wenn die Hydroxialkylsubstitution die Methyl-Substitution übertrifft, auf Hydroxiethylmethylcellulosen und Hydroxipropylmethylcellulosen, da der in größerer Menge vorhandene Substituent zuerst genannt wird. Diese Fälle sind jedoch weniger häufig.

Weiterhin spielen noch reine Hydroxialkylcellulosen wie Hydroxiethylcellulose HEC und in untergeordnetem Maße Hydroxipropylcellulose HPC in der Baustoffchemie eine Rolle. Desweiteren können auch Ethylhydroxiethylcellulosen EHEC zur Anwendung kommen.

Cellulosederivate werden aus den in der Natur vorkommenden Rohstoffen Cellulose und Baumwoll-Linters gewonnen. Diese Rohstoffe gehören zur großen Substanzklasse der Polysaccharide oder Kohlehydrate, die in vorliegendem Falle aus β-1,4 verknüpften Zucker-Bausteinen aufgebaut sind, was zu langen, kettenartigen Makromolekülen führt. Im Falle der Cellulose werden die Zuckerbausteine durch Glucose repräsentiert. Bei den nicht-endständigen Kettengliedern handelt es sich um sogenannte Anhydropyranose-Einheiten, die miteinander über β-1,4 Bindungen o-glycosidisch verknüpft sind. Jedes einzelne ringförmige Kettenglied bildet hierbei einen Sechsring, bestehend aus 5 Kohlenstoffatomen und einem Sauerstoffatom. Zu jeder dieser Anhydropyranose-Einheiten der Cellulose gehören 3 Hydroxylgruppen, die einer Veretherungsreaktion zugänglich sind. Bei zwei dieser Hydroxylgruppen handelt es sich um sekundäre Hydroxylgruppen an den Ringkohlenstoffatomen 2 und 3, die dritte Hydroxylgruppe ist primärer Natur und befindet sich am Kohlenstoffatom Nummer 6 (zur Zählweise der Kohlenstoffatome im Anhydropyranosering wird beispielsweise verwiesen auf: Jochen Lehmann, Chemie der Kohlenhydrate, Georg Thieme Verlag Stuttgart 1976, Seite 44).

Wenn alle drei einer Veretherung zugänglichen Hydroxylgruppen mit einem entsprechenden Veretherungsreagenz umgesetzt sind, spricht man von einem Substitutionsgrad von DS 3. DS steht für "degree of substitution". Bei Celluloseethern kann der Substitutionsgrad DS also maximal 3 betragen. Dies kann der Fall sein, wenn man mit monofunktionalen Reagenzien wie Methylchlorid oder Ethylchlorid umsetzt. Führt man eine Veretherungsreaktion allerdings mit potentiell bifunktionalen Reagenzien wie Oxiranen durch, kann der Substitutionsgrad jedoch höher als 3 sein. In diesem Falle spricht man von einem molaren Substitutionsgrad oder auch MS ("molar substitution"). Dies sei am Beispiel der Reaktion von Cellulose mit Ethylenoxid verdeutlicht. Unter der Annahme, dass bei einer Umsetzung von einem Äquivalent Cellulose mit Natronlauge als Katalysator mit 3 Äquivalenten Ethylenoxid eine Hydroxiethylcellulose HEC mit dem DS von 3 entstanden ist, können die 3 neu entstandenen Hydroxylgruppen der 3 Hydroxiethylgruppen mit weiterem Ethylenoxid reagieren, was zu weit höheren molaren Substitutionen MS führen kann. Der DS bleibt jedoch 3. Es könnte jedoch auch bei der Umsetzung von einem Mol Cellulose mit 3 Mol Ethylenoxid zunächst ein Mol Ethylenoxid am Kohlenstoffatom 6 angelagert werden, und die beiden nächsten Mole Ethylenoxid ebenfalls jeweils wieder an der neu entstandenen Hydroxylgruppe reagieren. Dann hätte man einen DS-Wert von 1 vorliegen, aber einen MS Wert von ebenfalls 3. Unter den allgemeinen bei Veretherungsreaktionen an Polysacchariden üblichen Reaktionsbedingungen finden die Substitutionen mit Alkylenoxiden bis zu einem MS von etwa 2,5 zunächst an den Hydroxylgruppen der Anhydropyranosekohlenstoffatome statt.

Der DS-Wert von Alkylcellulosen liegt in etwa bei 1,5 - 1,8 (Methylcellulosen MC).

Die wichtigen Alkylhydroxialkyl-Celluloseether Methylhydroxiethylcellulose MHEC und Methylhydroxipropylcellulose MHPC haben üblicherweise Substitutionsgrade von MS 1,3 bis 1,9 im Falle der Methylgruppe, und einen MS von 0,05 bis 0,8 im Falle der Hydroxialkylgruppen. Man gelangt bei diesen Mischethern durchschnittlich zu Gesamtsubstitutionsgraden von etwa 2.

Bei reinen Hydroxialylcellulosen (HEC und HPC) findet man MS-Werte im Bereich von etwa 1,5 bis 3,5.

Eine weitere wichtige Kenngröße von Celluloseethern ist der sogenannte DP oder Degree of Polymerisation, der bei gängigen Celluloseethern in der Größenordnung von 1500 bis 4000 liegt. Der DP steht in unmittelbaren Zusammenhang mit der Viskosität der Celluloseether in wässrigen Lösungen. Die Viskositätswerte von 2%igen wässrigen Lösungen von Celluloseethern, die in wasserhaltigen Baustoffmischungen üblicherweise zur Anwendung kommen, liegen bei 2000 bis 40000 mPa.s, gemessen am Brookfield RVT Rotationsviskosimeter bei 20 UpM und Raumtemperatur. Niedrig viskosere Celluloseether werden nur als Schutzkolloide bei Emulsionspolymerisationen und als Filmbildner eingesetzt.

Zur Anwendung als Wasserretentionsmittel kommen auch hydrophobisch modifizierte Celluloseether, wie beispielsweise hydrophobisch modifizierte Hydroxiethylcellulose, abgekürzt hmHEC, zum Einsatz. Dies wird durch Mitveretherung von Glycidylethern erreicht. Ein gängiger Glycidylether für diese Hydrophobierung ist n-Butylglycidylether. Selbst anionische Gruppen werden in die eigentlich nicht-ionischen Celluloseether zu Modifizierungszwecken eingebaut. Die in untergeordnetem Maße stattfindende Sulfopropylierungen bzw. Sulfobutylierungen durch Veretherung mit Propansulton bzw. Butansulton sind ein Beispiel hierfür. Auch die Umsetzung mit vinylsulfonsaurem Natriumsalz kommt für die anionische Modifizierung in Frage.

Neben den verschiedensten Substitutionsmöglichkeiten und Viskositätseinstellungen spielt die Korngrößenverteilung der Celluloseether eine wichtige Rolle, da von ihr die Lösegeschwindigkeit im Anmachwasser der Baustoffmischungen und die Kompatibilität mit den übrigen pulverförmigen Komponenten der Baustoffmischungen abhängt.

Um die Lösegeschwindigkeit der Celluloseether im Anmachwasser besser kontrollieren zu können, führt man auch auf der Oberfläche der Partikel Vernetzungsreaktionen mit Glyoxal durch, was zu einer temporären Halbacetalbildung führt, die im alkalischen Medium, also im kalk- und zementhaltigem Milieu, rasch wieder aufgehoben wird. Dadurch kann der Celluloseether rasch ausquellen und seine Wirkung als Wasserretentionsmittel entfalten. Durch diese Verfahrensweise wird auch die lästige Klumpenbildung unterdrückt.

Neben der strengen Einhaltung der Sieblinie und der Vernetzung stehen weitere Varianten zur Modifizierung der Eigenschaften der Methylcellulosen zur Verfügung.

Zur Endkonfektionierung werden Stärkeether und in geringen Mengen auch Polyacrylamide eingemischt. Während die Stärkeether eine Wirkung als Stellmittel entfalten und somit beispielsweise für den notwendigen Stand bei Fliesenklebern sorgen, erhöhen die Polyacrylamide die Konsistenz der wässrigen Baustoffmischung und ermöglichen so höhere Wasser/Trockenbaustoffmischungswerte.

Die Vielfalt der Variationen bei der Konfektionierung von marktüblichen nichtionischen Celluloseethern unterstreicht die große industrielle Bedeutung dieser Stoffgruppe.

Die Herstellung der beschriebenen Celluloseether ist dementsprechend aufwändig und setzt technisch anspruchsvolle Anlagen voraus, die besondere Maßnahmen beim Umgang mit dem gasförmigen Methylchlorid und dem bei Raumtemperatur ebenfalls gasförmigen Ethylenoxid erfordern.

Trotz der im allgemeinen recht guten Eigenschaften als Mittel zur Steuerung des Wasserrückhaltevermögens bietet sich ein universeller Einsatz der Celluloseether nicht immer an. Das Wasserrückhaltevermögens der Celluloseether lässt bei höheren Temperaturen im Bereich von 40 Grad Celsius und darüber, wie sie in südlichen Ländern gerade im Sommer häufig vorkommen, deutlich nach.

Zudem handelt es sich bei Celluloseethern um eine relativ teure Verbindungsklasse.

Es hat deshalb auch nicht an vielfältigen Bemühungen gefehlt, Alternativprodukte zu Celluloseethern als Wasserretentionsmittel in Trockenbaustoffmischungen zu entwickeln, um solche Nachteile auszugleichen.

So kamen beispielsweise in den letzten Jahren Guarether wie Hydroxipropylguar verstärkt gerade in den Ländern Südeuropas zum Einsatz.

Die EP 0235513 beschreibt die Verwendung von vernetzten Guarethern aus der Gruppe Alkylguar, Hydroxialkylguar und Alkylhydroxialkylguar Mischethern.

Die EP 1264808 beansprucht den Einsatz von Hydroxialkylguar mit einem molaren Substitutionsgrad von 0,7 bis 3,0 als Wasserretentionsmittel in zementhaltigen Mörtelsystemen.

Die WO 03/078474 beschreibt glyoxalvernetzte, hydrophobisch modifizierte Hydroxialkylguarether, wobei die Hydrophobierung durch (C₁₀-C₃₂)-Alkylreste erreicht wird, die im Mengenverhältnis 1:35 bis 1:40000 zu den Hydroxialkylgruppen stehen. Der Substitutionsgrad der Hydroxipropylgruppen soll dabei mindestens 0,4, und die Viskosität, gemessen als 2%ige wässrige Lösung, mindestens 20000 mPa.s betragen, der Glyoxalgehalt in Gewichtsprozent soll zwischen 0,3% und 1,5% liegen.

In der WO 03/078473 wird Hydroxialkylguar als Zusatz für Baustoffmischungen beansprucht, wobei der Substitutionsgrad zwischen 0,7 und 1,5, der Glyoxalgehalt zwischen 0,3% und 1,5% und die Viskosität, gemessen als 2%ige Lösung in Wasser, bei über 20000 mPa.s liegen soll.

Die WO 2007/051723 beansprucht Methylguar mit Substitutionsgraden der Methylgruppen von über 1,5 als Zusatzmittel zu zementhaltigen Baustofftrockenmischungen.

Ein Nachteil dieser Guarether ist der immer noch sehr hohe Veretherungsgrad. Die Praxis zeigt, das in schon leicht alkalischen Baustoffmischungssystemen bei pH-Werten von über 12, wie sie bereits beim Vorhandensein von wenigen Prozenten Löschkalk vorliegen, ein realer Substitutionsgrad von wenigstens 0,65 bis 0,70 notwendig ist, um brauchbare Ergebnisse bezüglich des Wasserrückhaltungsvermögens zu erzielen.

Nach dem bis heute bekannten Stand der Technik war nicht davon auszugehen, dass neben den beschriebenen nichtionischen Celluloseethern und den hochviskosen Guarethern Produkte auf Polysaccharidbasis gefunden werden, die sich ebenfalls, und zwar bei schon verhältnismäßig geringen Veretherungsgraden, als Mittel zur Steuerung der Wasserretention in wässrigen, alkalischen Baustoffmischung eignen.

Es war deshalb gänzlich unerwartet, dass sich die Hydroxiethylether, die Hydroxipropylether und die Hydroxibutylether von in den Endospermabschnitten von Cassia obtusifolia/tora vorkommenden Galaktomannan-Polysacchariden schon bei relativ niedrigen Substitutionsgraden hervorragend als Wasserretentionsmittel in wässrigen, alkalischen, hydraulisch abbindenden Bindemittelsystemen bewähren.

Dieses Ergebnis war umso überraschender, als es sich bei Guar-Polysaccharid und Cassia-Polysaccharid in Bezug auf die Zuckerbestandteile und der Art der chemischen Verknüpfungen derselben um die gleiche Verbindungsklasse handelt.

Sowohl das Guar-Reservekohlenhydrat als auch das Cassia-Reservekohlenhydrat gehören der Verbindungsklasse der Polygalaktomannane an.

Galaktomannane sind, wie die Stärke, pflanzliche Reservepolysaccharide, die in den Endospermzellen vieler Leguminosenarten vorkommen. Bei der Keimung der Samen werden diese Reservepolysaccharide enzymatisch abgebaut und die Zuckermonomere dienen als Nährstoffe für den Keimling. Der Sammelbegriff Galaktomannan umfasst alle Polysaccharide, die aus Mannose- und Galaktose-Bausteinen aufgebaut sind und darüber hinaus in untergeordnetem Maße auch weitere Zuckerbausteine aufweisen können. Je nach Herkunft gibt es eine verhältnismäßig große Anzahl von Galaktomannanen. Sie kommen hauptsächlich in den Endospermabschnitten der Samen verschiedener Leguminosen (Hülsenfrüchtlern) wie Guar, Johannisbrot, Tara, Sesbania, Cassia, Prosopis, Crotalaria, Indigofera, Honigbohne, Bockshornklee und Flammenbaum vor. Galaktomannane weisen als gemeinsames Strukturmerkmal eine lineare Polymannan-Kette auf, die aus β-(1,4)-glycosidisch verknüpften Mannopyranoseringen aufgebaut ist. An diese sind am primären Kohlenstoffatom in C6-Stellung als Verzweigung einzelne Galaktopyranoseringe über eine α-(1,6)-glycosidische Bindung fixiert (zur Zählweise der Pyranosekohlenstoffatome wird beispielsweise verwiesen auf: Jochen Lehmann, Chemie der Kohlenhydrate, Georg Thieme Verlag Stuttgart 1976, Seite 44).

Von den zahlreichen bekannten Galaktomannanen werden insbesondere vier gewonnen und verwendet:
Johannisbrotkernmehl (Carubin, Locust Bean Gum) ist seit langem bekannt. Es wird aus den Samen des Johannisbrotbaumes (Ceratonia siliqua L.) gewonnen, der in den Mittelmeerländern beheimatet ist.

Guar (Guargummi, Guaran, Guar Gum, Guarkernmehl) ist heute das weitaus wichtigste Galaktomannan. Es wird aus den Samen der in Indien und Pakistan beheimateten Guarbohne (Cyamopsis tetragonolobus L. taub.) gewonnen.

Taragummi (Tara Gum) wird erst seit kurzem in geringen Mengen aus den Samen des Tarabaumes (Caesalpinia spinosa) produziert, der vor allem in Peru wächst.

Cassia (Cassiagummi, Cassia Gum, Cassiakernmehl) wird ebenfalls erst in jüngerer Zeit aus den Samen des in Indien vorkommenden Cassiastrauches (Cassia obtusifolia, Cassia tora) isoliert.

Kommerziell genutztes Cassiamehl wird aus den Endospermabschnitten vergesellschaftet vorkommender Samen von Cassia obtusifolia und Cassia tora gewonnen und besteht in der Regel zu 80-90% aus Cassia obtusifolia Galaktomannan und zu 10-20% aus Cassia tora Galaktomannan. In den chemischen und physikalischen Eigenschaften der beiden Galaktomannanvarietäten ist kein Unterschied festzustellen. Beide Pflanzen sind auch als Senna obtusifolia bzw. als Senna tora bekannt. Zur Taxonomie und Evolution von Cassia obtusifolia und Cassia obtusifolia wird von Randell berichtet (Journal of Adelaide Botanical Garden, (1995), Band 16, Seite 55-58).

Potentielle wirtschaftliche Bedeutung haben des weiteren Sesbania bispinosa, Prosopis juliflora und Trigonella foenum-graecum L..

Die einzelnen Galaktomannane unterscheiden sich im wesentlichen im Verhältnis der Grundbausteine Galaktose:Mannose. Dieses beträgt bei Cassia idealisiert 1:5, bei Johannisbrotkernmehl 1:4, bei Tara 1:3, bei Guar 1:2 und bei Prosopis nahezu 1:1. Bei den erfindungsgemäßen Hydroxialkylethern des Cassiagalaktomannan handelt es sich insbesondere um die Hydroxiethylether, die Hydroxipropylether und die Hydroxibutylether, kurz Hydroxiethylcassia (HEC), Hydroxipropylcassia (HPC) bzw. Hydroxibutylcassia (HBC) genannt.

Diese erfindungsgemäßen Verbindungen können dadurch hergestellt werden, dass man Cassiagalaktomannan in an sich bekannter Weise mit Alkylenoxid umsetzt (EP 0146911). 2-Hydroxialkylether, die durch Umsetzung von Cassiagalaktomannan mit Ethylenoxid, Propylenoxid oder Butylenoxid gewonnen wurden, sind Stand der Technik. Die Umsetzung von Cassiagalaktomannan mit Pentylenoxid ist prinzipiell ebenfalls möglich. Sie ist jedoch vergleichsweise teurer, wesentlich reaktionsträger und bringt nicht die Reaktionsausbeuten der vorgenannten Alkylenoxide. Cassia-2-Hydroxipentylether sind weniger bevorzugt.

Durch die chemische Modifikation werden an das Polygalaktomannangerüst Hydroxialkylgruppen gekoppelt. Erfindungsgemäß liegt der Grad der Substitution zwischen 0,1 und 0,6, bevorzugt zwischen 0,3 und 0,6. Der "Grad der Substitution" (degree of substitution, DS) wird definiert als die durchschnittliche Anzahl von funktionellen Substituenten, die an das Polysaccharidgerüst angeheftet werden. Maximal wäre ein Grad der Substitution von bis zu 3 erzielbar, weil jeder Zuckerrest in dem Galaktomannangerüst drei potentiell derivatisierbare Hydroxylgruppen aufweist.

Erfindungsgemäß werden über die Hydroxylgruppen des Polygalaktomannangerüstes Hydroxialkylgruppen gebunden. Bei den bevorzugten Resten handelt es sich um Hydroxiethyl-, Hydroxipropyl- und Hydroxibutylgruppen.

Erfindungsgemäß werden auch Mischether von Cassiagalaktomannan für die erfindungsgemäße Anwendung bereitgestellt und auf ihre Eignung überprüft. Unter Mischethern sind in diesem Zusammenhang Produkte zu verstehen, bei denen zusätzlich zur Umsetzung zu den Cassia-C₂-C₄-hydroxialkylethern eine hydrophobierende Modifizierung mittels einer Zweitsubstitution am Cassia-Polygalaktomannan durch die Einführung eines weiteren, weniger hydrophilen, nicht-ionischen Substituenten erfolgt ist. Als Derivatisierungsreagenzien für eine Zweitsubstitution eignen sich besonders Alkylglycidylether, Alkylarylglycidylether oder Gycidylester von Fettsäuren, über deren Reaktion mit den Hydroxialkyl-Cassiaethern die zusätzliche Einführung einer Alkoxihydroxialkylgruppe am Polygalaktomannangerüst erfolgt. Grundsätzlich kann auch erst die Einführung der glycidylfunktionellen Komponente und dann erst die Einführung der Hydroxialkylgruppe erfolgen.

Eine weitere Möglichkeit einer hydrophobierenden Zweitsubstitution besteht in der Umsetzung der Cassia-C₂-C₄-hydroxialkylether mit Alkylhalogeniden, wobei der Alkylrest ein C₈-C₂₂-Alkylradikal ist.

Erfolgt die Zweitsubstitution mit einem C₈-C₂₂-Alkylrest, wird der Substitutionsgrad so eingestellt, dass der gesamte Substitutionsgrad zwischen 0,2 und 0,6 liegt, wobei der Substitutionsgrad des Zweitsubstituenten so eingestellt wird, dass die volle Wasserlöslichkeit des Mischethers gewährleistet bleibt. Das Verhältnis von Hydroxialkylether-Substitution zu C₈-C₂₂-Alkylrest liegt bei mindestens 20:1, bevorzugt bei 50:1, und ganz besonders bevorzugt bei 100:1.

Auch eine gleichzeitige, gemeinsame Reaktion der beiden epoxifunktionellen Reagenzien, also sowohl der Glycidylderivate als auch der C₂-C₄-Alkylenoxide Ethylenoxid, Propylenoxid oder Butylenoxid, lässt sich verifizieren.

Von den möglichen Alkylglycidylethern, Alkylarylglycidylethern oder Gycidylestern eignen sich ganz besonders Alkylglycidylether mit einer geradkettigen oder verzweigten Alkylgruppe mit 2-6 Kohlenstoffatomen, bevorzugt 2-4 Kohlenstoffatomen, wie die Ethyl-, Propyl-, Butyl-, Pentyl- oder 2-Ethylhexyl-Gruppe. Der am meisten bevorzugte Alkylglycidylether ist der n-Butylglycidylether.

Die beschriebenen Cassia-Mischether mit C₂-C₄-Hydroxialkylgruppen und Alkoxihydroxialkylgruppen sind nicht-ionischer Natur, sie sind Gegenstand der Erfindung.

Die beschriebenen Cassia-Mischether mit C₂-C₄-Hydroxialkylgruppen und C₈-C₂₂-Alkylgruppen sind ebenfalls nicht-ionischer Natur und Gegenstand der Erfindung.

Gegenstand der vorliegenden Erfindung ist auch die Verwendung der vorliegend beschriebenen (C₂₋₄)-Hydroxialkyl-Cassiagalaktomannanether und/oder der auf (C₂₋₄)-Hydroxialkyl-Cassiagalaktomannaether basierenden nichtionischen Mischether als Wasserretentionsmittel in einer hydraulisch abbindenden Baustoffmischung.

Grundsätzlich sind noch weitere Substitutionen möglich. Zur weiteren Derivatisierung mit unterschiedlichen Substituenten bieten sich beispielsweise Propansulton oder Butansulton sowie Chloressigsäure, deren Natriumsalz oder Glycidyltrimethylammoniumchlorid, 1-Chlor-2-hydroxipropyl-trimethyl-ammoniumchlorid oder 1-Chlorethanol an. Gebräuchlich sind auch Umsetzungen mit Vinylsulfonsäure oder deren Natriumsalz.

Eine solche weitere Substitution würde zu Cassiamischethern mit Polyelektrolytnatur führen. Solche Cassiamischether, die negative oder positive Ladungen am Polysaccharidgerüst tragen, sind weniger bevorzugt.

Die Herstellung von Hydroxialkylethern des Guar ist hinlänglich bekannt und seit langer Zeit Stand der Technik (US3326890).

In den folgenden Beispielen wird die Erfindung näher erläutert. Die in den Beispielen genannten Teile sind Gewichtsteile. Die Viskosität, wenn nicht anders beschrieben, wurde am Brookfield Rotationsviskosimeter RVT bei 20 °C und 20 UpM mit der geeigneten Spindel gemessen. Die Bestimmung des Substitutionsgrades erfolgte im Falle der 2-Hydroxipropylderivate spektrophotometrisch nach der Methode von D. P. Johnson (Anal. Chem., Band 41, Heft 6, Seite 859, Mai 1969).

Im Falle der Hydroxibutyl- bzw. Hydroxiethyl-Derivate erfolgte die Bestimmung des Substitutionsgrades nach Etherspaltung mit Jodwasserstoff nach Zeisel-Morgan.

Vor der Bestimmung des Substitutionsgrades wurden die Polygalaktomannanether zur Entfernung von Alkylenglykolen bzw. Polyalkylenglykolen 48 Stunden lang mit Methanol bzw. Isopropanol am Soxhlet extrahiert.

Die Messung des Wasserrückhaltevermögens erfolgte gemäss DIN 18555, Teil 7.

Die Konsistenz der Mörtel wurde nach Zugabe bestimmter Wassermengen nach DIN 18555 Teil 2 auf ein Ausbreitmaß von circa 18 cm eingestellt.

### Beispiel 1

### Untersuchung des Wasserrückhaltevermögens in einem zementären System

Durchführung: Wasser wurde in der Rührschüssel einer Bosch-Küchenmaschine vorgelegt und Mischungen aus Portlandzement CEM I 42,5 R, Sand (Quarzsand der Körnung 0,1 bis 0,5 mm), Abbindeverzögerer und Galaktomannanether als Wasserretentionsmittel wurden rasch eingerührt. Nach 3 Minuten Rührzeit wurde ein Teil des Mörtels zur Bestimmung des Wasserrückhaltevermögens in einen Vicat-Ring mit 40 mm Höhe, einem unteren Durchmesser von 65 mm, und einem oberen Durchmesser von 75 mm, gefüllt. Das Wasserrückhaltevermögen wurde anschließend nach einer Saugzeit von 5 Minuten bestimmt.

Ein anderer Teil des Mörtels wurde zur Bestimmung der Dichte verwendet, ein weiterer Teil zur Ermittlung des Ausbreitmaßes.

In Tabelle 1 sind die Ergebnisse der Untersuchungen zusammengefasst.

WRV bedeutet Wasserrückhaltevermögen. ABM ist die Abkürzung für Ausbreitmaß. WRM steht für Wasserrückhaltemittel.

Wasserrückhaltewerte von weniger als 96% werden als unzureichend angesehen.

Als Kontrolle (Blindwert) wurde ein Mörtel ohne ein Wasserrückhaltemittel hergestellt.

HPG1 ist ein Hydroxipropylguar mit einem Substitutionsgrad von 0,39. Die Viskosität einer 2%igen wässriger Lösung betrug 15000 mPa.s, gemessen am Brookfield RVT Rotationsviskosimeter bei 20 UpM bei 25 °C.

HPG2 ist ein Hydroxipropylguar mit einem Substitutionsgrad von 0,58 und einer Brookfield-Viskosität von 2% von 7800 mPa.s

HPC1 ist Hydroxipropyl-Cassia mit einem Substitutionsgrad von 0,33 und einer Brookfieldviskosität von 3% von 38000 mPa.s.

Als Verzögerer kam ein Eiweißabbauprodukt auf Kollagenbasis zum Einsatz (Plast Retard PE).

Die Ergebnisse zeigen, dass Cassiaether 1 mit einem Substitutionsgrad von 0,33 ein mindestens ebenso gutes Wasserrückhaltevermögen hat wie der Guarether 2 mit einem Substitutionsgrad von 0,58.

Cassiaether 1 mit einem Substitutionsgrad von 0,33 zeigt ein deutlich besseres Wasserrückhaltevermögen als Guarether 1, obwohl Guarether 1 mit einem Substitutionsgrad von 0,39 schon einen leicht höheren Veretherungsgrad als Cassiaether 1 aufweist.

Cassiaether sind also den Guarethern bei gleichen Veretherungsgraden im Wasserrückhaltevermögen überlegen.

Erst wenn der Veretherungsgrad von Guarethern etwa doppelt so hoch ist wie der der Cassiaether, erreichen die Guarether eine ähnliche Wasserrückhaltewirkung wie die Cassiaether.

Dieses Vergleichsbeispiel zeigt, dass überraschenderweise bei Cassiaethern ein Veretherungsgrad, der etwa nur halb so hoch ist wie der bei einem Guarether, vergleichbar gute Wasserrückhalteeigenschaften aufweist. Durch dieses überraschende Ergebnis wird es ermöglicht, Galaktomannane aus Cassia einzusetzen, die nur einen sehr viel geringeren Substitutionsgrad aufweisen als die entsprechenden Guarether.

### Tabelle 1

| Komponenten | Einwaage [g] | Wasser [g] | WRV [%] | ABM [cm] | Spez. Gew. [kg/l] |
|---|---|---|---|---|---|
| Zement | 180 | | | | |
| Quarzsand | 719 | 160 | 89,6 | 17,8 | 1,95 |
| Verzögerer | 0,1 | | | | |
| Ohne WRM | ----- | | | | |
| Zement | 180 | 200 | 86,1 | 17,5 | 1,97 |
| Quarzsand | 719 | | | | |
| Verzögerer | 0,1 | | | | |
| HPG1 | 0,9 | | | | |
| Zement | 180 | 190 | 98,5 | 17,6 | 1,72 |
| Quarzsand | 719 | | | | |
| Verzögerer | 0,1 | | | | |
| HPG2 | 0,9 | | | | |
| Zement | 180 | 175 | 98,7 | 17,8 | 1,70 |
| Quarzsand | 719 | | | | |
| Verzögerer | 0,1 | | | | |
| HPC1 | 0,9 | | | | |

### Beispiel 2

### Untersuchung des Wasserrückhaltevermögens in einem alkalischen, gipsbasiertem System.

Durchführung: Wasser wurde in der Rührschüssel einer Bosch-Küchenmaschine vorgelegt und vorgefertigte Mischungen aus Gips β-Halbhydrat, Kalk, Netzmittel, Abbindeverzögerer, Konsistenzgeber und Galaktomannanether als Wasserretentionsmittel wurden rasch eingerührt. Nach 3 Minuten Rührzeit wurde ein Teil des Gipsbreies zur Bestimmung des Wasserrückhaltevermögens in einen Vicat-Ring mit 40 mm Höhe, unterer Durchmesser 65 mm, oberer Durchmesser 75 mm, gefüllt. Nach 5-minütiger Saugzeit wurde die Wasseraufnahme des Saug-Fliesses gewogen und das Wasserrückhaltevermögen berechnet.

Ein anderer Teil des Gipsbreies wurde zur Bestimmung der Dichte verwendet, ein weiterer Teil zur Ermittlung des Ausbreitmaßes.

Im Unterschied zu Beispiel 1 wurde mit einem konstanten Wasser/Gips-Faktor von 0,55 gearbeitet.

Der pH-Wert des Gipsbreies lag konstant jeweils bei 11,7.

Als Abbindeverzögerer wurde das gleiche Kollagenhydrolysat wie in Beispiel 1 verwendet.

Als Netzmittel wurde ein pulverförmiges nicht-ionisches EO/PO-Blockpolymerisat mit 80 % Ethylenoxid-Anteil, einem HLB-Wert von ca. 16 und einem Trübungspunkt von 69°C - 72°C (gemessen in 1%ig in 10%iger NaCI-Lösung) eingesetzt.

Das Verdickungsmittel war aus der Produktklasse der Polyacrylamide gewählt. Im vorliegenden Beispiel wurde ein anionisches Polyacrylamid mit einer anionischen Ladungsdichte von ca. 30 Molprozent Acrylsäuremonomeranteil der Viskositätsstufe 0,5%ig in destilliertem Wasser von 2000 mPa.s und 0,1%ig von 360 mPa.s gewählt. HPG3 ist ein glyoxal-vernetzter Hydroxipropylguar mit einem Substitutionsgrad von 0,34. Die Viskosität einer 2%igen wässriger Lösung betrug 15000 mPa.s, gemessen am Brookfield RVT Rotationsviskosimeter bei 20 UpM bei 25 °C.

HPG4 ist ein glyoxal-vernetzter Hydroxipropylguar mit einem Substitutionsgrad von 0,48. Die Viskosität einer 2%igen wässriger Lösung betrug 10250 mPa.s, gemessen am Brookfield RVT Rotationsviskosimeter bei 20 UpM bei 25 °C.

HPC2 ist glyoxal-vernetzte Hydroxipropyl-Cassia mit einem Substitutionsgrad von 0,29 und einer Brookfieldviskosität von 3% von 37500 mPa.s.

HBC1 ist ein Hydroxibutyl-Cassia-Ether, der zusätzlich in untergeordnetem Maß mit n-Butylglycidyether umgesetzt wurde.

**Tabelle 2**

| Komponenten | Einwaage [g] | Wasser [g] | WRV [%] | W/G F | ABM [cm] |
|---|---|---|---|---|---|
| Gips | 792 | | | | |
| Kalk | 8,0 | 440 | 94,2 | 0,55 | 17,8 |
| Verzögerer | 0,112 | | | | |
| Netzmittel | 0,4 | | | | |
| Verdickungsmittel Ohne WRM | 0,08 | | | | |
| Gips | 792 | 440 | 96,5 | 0,55 | 20,6 |
| Kalk | 8,0 | | | | |
| Verzögerer | 0,112 | | | | |
| Netzmittel | 0,4 | | | | |
| Verdickungsmittel | 0,08 | | | | |
| HPG3 | 2,0 | | | | |
| Gips | 792 | 440 | 98,1 | 0,55 | 17,6 |
| Kalk | 8,0 | | | | |
| Verzögerer | 0,112 | | | | |
| Netzmittel | 0,4 | | | | |
| Verdickungsmittel | 0,08 | | | | |
| HPG4 | 2,0 | | | | |
| Gips | 792 | 440 | 98,8 | 0,55 | 17,8 |
| Kalk | 8,0 | | | | |
| Verzögerer | 0,112 | | | | |
| Netzmittel | 0,4 | | | | |
| Verdickungsmittel | 0,08 | | | | |
| HPC2 | 2,0 | | | | |
| Gips | 792 | 440 | 98,4 | 0,55 | 18,3 |
| Kalk | 8,0 | | | | |
| Verzögerer | 0,112 | | | | |
| Netzmittel | 0,4 | | | | |
| Verdickungsmittel | 0,08 | | | | |
| HBC1 | 2,0 | | | | |

Bei HBC1 handelt es sich um einen Cassia-Mischether, der als Erstsubstituenten eine Hydroxibutylgruppe trägt und in einer weiteren Veretherungsreaktion mit n-Butylglycidylether umgesetzt wurde.

Der BHC1-haltige Gips-/Kalkmörtel zeigt neben den positiven Eigenschaften im Wasserrückhaltevermögen ein niedrigeres spezifisches Gewicht als die Vergleichsmischungen, was zu Verbesserungen bezüglich der Ergiebigkeit des Mörtels führt.

### Beispiel 3

### Herstellung eines Hydroxialkyl-Cassiamischethers

Mischether auf Basis von Cassiagalaktomannan sind nicht Stand der Technik. Das Beispiel beschreibt die Herstellung eines Hydroxibutyl-((n-butoxi)-(2- hydroxipropyl))-Cassiamischethers mit einer Hydroxibutylgruppe als Hauptsubstituenten und einer n-Butoxi-(2-hydroxipropyl)gruppe als Zweitsubstituenten. Das Beispiel beschreibt die Herstellung eines solchen Cassiamischethers mit theoretischen Substitutionsgraden von 0,5 der Hydroxibutylgruppe und 0,1 der n-Butoxi-hydroxipropylgruppe.

92 Gramm Cassiamehl mit einem Feuchtigkeitsgehalt von 12 % (0,5 Mol atro) wurden in einem Dreihalskolben, der wie üblich mit Rührer, Rückflusskühler und Tropftrichter bestückt war, in 500 ml t-Butanol suspendiert.

Anschließend wurden 30 ml einer 10%igen Natronlauge innerhalb von 3 Minuten zugegeben und gerührt. Nach 10 minütiger Alkalisierungszeit wurden 18 g Butylenoxid während 5 Minuten zugetropft und das Gemisch 2 Stunden bei 60°C, 1 Stunde bei 70°C und 1 Stunde bei 80°C gerührt.

Zu dieser auf 80°C gehaltenen Suspension wurden langsam während 10 Minuten 6,4 g n-Butylglycidylether getropft und 1 weitere Stunden bei 80 °C gerührt.

Nach Abkühlen auf Raumtemperatur wurde die Suspension mit Salzsäure neutralisiert. Der Cassiamischether wurde abfiltriert, 3-mal mit 70%igen t-Butanol nachgewaschen und bei 60 °C im Trockenschrank getrocknet.

Die Ausbeute betrug 101 g Cassiamischether.

Die Viskosität einer 3%igen wässrigen Lösung des Cassiamischethers betrug 13000 mPa.s. Der Substitutionsgrad der Hydroxibutylgruppe betrug 0,32. Der Substitutionsgrad der n-Butoxi-(2-hydroxipropyl)-gruppe wurde nicht bestimmt.

## Patentansprüche

1. Hydraulisch abbindende Baustoffmischung auf Basis von Gips, Gips/Kalk, Kalk/Zement oder Zement, die (C₂₋₄)-Hydroxyalkyl-Cassiagalaktomannanether und/oder auf (C₂₋₄)-Hydroxyalkyl-Cassiagalaktomannanether basierende nichtionische Mischether als Wasserretentionsmittel enthalten.

2. Hydraulisch abbindende Baustoffmischung nach Anspruch 1, wobei die (C₂₋₄)-Hydroxyalkyl-Cassiagalaktomannanether Hydroxypropyl-Cassiagalaktomannanether und/oder Hydroxybutyl-Cassiagalaktomannanether und/oder Hydroxyethyl-Cassiagalaktomannanether sind.

3. Hydraulisch abbindende Baustoffmischung nach Anspruch 1 oder 2, wobei die (C₂₋₄)-Hydroxyalkyl-Cassiagalaktomannanether Hydroxyalkyl-Substitutionsgrade von 0,2 bis 0,6 aufweisen.

4. Hydraulisch abbindende Baustoffmischung nach Anspruch 1, wobei die (C₂₋₄)-Hydroxyalkyl-Cassiagalaktomannanmischether als Erstsubstituenten Hydroxyalkylgruppen mit Substitutionsgraden von 0,2 bis 0,6 und als Zweitsubstituenten 3-Alkoxy-2-Hydroxypropylgruppen oder n-Alkylgruppen mit Substitutionsgraden von höchstens 0,2 haben.

5. Hydraulisch abbindende Baustoffmischung nach Anspruch 4, wobei der 3-Alkoxy-Rest ein n-Butoxy-Rest ist.

6. Hydraulisch abbindende Baustoffmischung nach Anspruch 4, wobei die n-Alkylgruppe ein C₈-C₂₂-Alkylrest ist.

7. Verwendung von (C₂₋₄)-Hydroxyalkyl-Cassiagalaktomannanether und/oder auf (C₂₋₄)-Hydroxyalkyl-Cassiagalaktomannanether basierende nichtionische Mischether als Wasserretentionsmittel in hydraulisch abbindender Baustoffmischung auf Basis von Gips, Gips/Kalk, Kalk/Zement oder Zement.

8. Verwendung nach Anspruch 7, **dadurch gekennzeichnet, dass** die (C₂₋₄)-Hydroxyalkyl-Cassiagalaktomannanether Hydroxypropyl-Cassiagalaktomannanether und/oder Hydroxybutyl-Cassiagalaktomannanether und/oder Hydroxyethyl-Cassiagalaktomannanether sind.

9. Verwendung nach Anspruch 7 oder 8, **dadurch gekennzeichnet, dass** die (C₂₋₄)-Hydroxyalkyl-Cassiagalaktomannanether Hydroxyalkyl-Substitutionsgrade von 0,2 bis 0,6 aufweisen.

## Claims

1. A hydraulically setting building material mixture on the basis of gypsum, gypsum/lime, lime/cement, or cement, containing (C₂₋₄)-hydroxyalkyl cassia galactomannan ethers and/or (C₂₋₄)-hydroxyalkyl cassia galactomannan ether-based non-ionic mixed ethers as water retention agent.

2. The hydraulically setting building material mixture according to claim 1, wherein the (C₂₋₄)-hydroxyalkyl cassia galactomannan ethers are hydroxypropyl cassia galactomannan ether and/or hydroxybutyl cassia galactomannan ether and/or hydroxyethyl cassia galactomannan ether.

3. The hydraulically setting building material mixture according to claim 1 or 2, wherein the (C₂₋₄)-hydroxyalkyl cassia galactomannan ethers have hydroxyalkyl degrees of substitution of 0.2 to 0.6.

4. The hydraulically setting building material mixture according to claim 1, wherein the (C₂₋₄)-hydroxyalkyl cassia galactomannan mixed ethers as the primary substituents have hydroxyalkyl groups with degrees of substitution of 0.2 to 0.6 and as secondary substituents have 3-alkoxy-2-hydroxypropyl groups or n-alkyl groups with degrees of substitution of at most 0.2.

5. The hydraulically setting building material mixture according to claim 4, wherein the 3-alkoxy residue is an n-butoxy residue.

6. The hydraulically setting building material mixture according to claim 4, wherein the n-alkyl group is a C₈-C₂₂-alkyl residue.

7. Use of (C₂₋₄)-hydroxyalkyl cassia galactomannan ethers and/or (C₂₋₄)-hydroxyalkyl cassia galactomannan ether-based non-ionic mixed ethers as water retention agents in a hydraulically setting building material mixture on the basis of gypsum, gypsum/lime, lime/cement, or cement.

8. Use according to claim 7, **characterized in that** the (C₂₋₄)-hydroxyalkyl cassia galactomannan ethers are hydroxypropyl cassia galactomannan ether and/or hydroxybutyl cassia galactomannan ether and/or hydroxyethyl cassia galactomannan ether.

9. Use according to claim 7 or 8, **characterized in that** the (C₂₋₄)-hydroxyalkyl cassia galactomannan ethers have hydroxyalkyl degrees of substitution of 0.2 to 0.6.

## Revendications

1. Mélange de matières à liaison hydraulique à base de plâtre, de plâtre/chaux, de chaux/ciment ou de ciment qui contiennent de l'hydroxyalkyle (en C₂ à C₄)-éther de cassia-galactomannane et/ou des éthers mixtes non ioniques à base d' hydroxyalkyle (en C₂ à C₄) -éther de cassia-galactomannane.

2. Mélange de matières à liaison hydraulique selon la revendication 1, dans lequel les hydroxyalkyle (en C₂ à C₄)-éther de cassia-galactomannanes sont des hydroxypropyl-éther de cassia-galactomannanes et/ou des hydroxybutyl-éther de cassia-galactomannanes et/ou des hydroxyéthyl-éther de cassia-galactomannanes.

3. Mélange de matières à liaison hydraulique selon la revendication 1 ou 2, dans lequel les hydroxyalkyle (en C₂ à C₄)-éther de cassia-galactomannanes présentent un degré de substitution de l'hydroxyalkyle de 0,2 à 0,6.

4. Mélange de matières à liaison hydraulique selon la revendication 1, dans lequel les hydroxyalkyle (en C₂ à C₄)-éther de cassia-galactomannanes ont, comme premiers substituants, des groupes hydroxyalkyle comportant des degrés de substitution de 0,2 à 0,6 et comme deuxièmes substituants, des groupes 3-alcoxy-2-hydroxypropyle ou des groupes n-alkyle comportant des degrés de substitution au plus de 0,2.

5. Mélange de matières à liaison hydraulique selon la revendication 4, dans lequel le radical 3-alcoxy est un radical n-butoxy.

6. Mélange de matières à liaison hydraulique selon la revendication 4, dans lequel le groupe n-alkyle est un radical alkyle en C₈ à C₂₂.

7. Utilisation d'hydroxyalkyle (en C₂ à C₄)-éther de cassia-galactomannane et/ou d'éthers mixtes non ioniques à base d'hydroxyalkyle (en C₂ à C₄)-éther de cassia-galactomannane comme agents de rétention d'eau dans un mélange de matières à liaison hydraulique à base de plâtre, de plâtre/chaux, chaux/ciment ou ciment.

8. Utilisation selon la revendication 7, **caractérisée en ce que** les hydroxyalkyle (en C₂ à C₄)-éther de cassia-galactomannanes sont des hydroxypropyl-éther de cassia-galactomannanes et/ou des hydroxybutyl-éther de cassia-galactomannanes et/ou des hydroxyéthyl-éther de cassia-galactomannanes.

9. Utilisation selon la revendication 7 ou 8, **caractérisée en ce que** les hydroxyalkyle (en C₂ à C₄)-éther de cassia-galactomannanes présentent des degrés de substitution de l'hydroxyalkyle de 0,2 à 0,6.
